# EUROPÄISCHE PATENTSCHRIFT

(11) **EP 4 628 363 B1**
(45) Veröffentlichungstag und Bekanntmachung des Hinweises auf die Patenterteilung: **21.10.2026**
(21) Anmeldenummer: 24168040.4
(22) Anmeldetag: 02.04.2024
(51) Int. Cl.: B60Q 1/44, B60Q 1/50, B60Q 11/00, F21S 41/255, F21S 41/365, F21S 41/675, F21S 43/00, G02B 26/08, F21W 102/19, G03B 21/14, F21S 43/241, F21S 43/242, F21S 43/20, F21S 43/31, H04N 9/31, G03B 21/20

(54) **LICHTMODUL, INSBESONDERE FÜR EINE KRAFTFAHRZEUG-BELEUCHTUNGSEINRICHTUNG, UND VERFAHREN ZU DESSEN BETRIEB**
LIGHT MODULE, IN PARTICULAR FOR A MOTOR VEHICLE LIGHTING DEVICE, AND METHOD FOR OPERATING SAME
MODULE LUMINEUX, EN PARTICULIER POUR UN DISPOSITIF D'ÉCLAIRAGE DE VÉHICULE AUTOMOBILE, ET SON PROCÉDÉ DE FONCTIONNEMENT

(43) Veröffentlichungstag der Anmeldung: 08.10.2025
(73) Patentinhaber: Universität Kassel (Körperschaft d. öffentlichen Rechts), 34125 Kassel (DE)
(72) Erfinder: BÖRCSOK, Josef, 68753 Waghäusel (DE); HILLMER, Hartmut, 34128 Kassel (DE); MICHEL, Jakob, 34134 Kassel (DE); TELAWI, Samer, 34125 Kassel (DE)
(74) Vertreter: Walther Bayer Faber Patentanwälte PartGmbB

(56) Entgegenhaltungen:
- EP-A1- 4 102 024
- DE-A1- 10 344 173
- DE-A1- 10 358 967
- DE-A1- 102014 225 246
- DE-A1- 102015 222 921
- DE-A1- 102018 205 143
- FR-A1- 3 049 681
- FR-A1- 3 057 336
- US-A- 5 681 103
- US-A1- 2009 303 743
- US-A1- 2011 037 053

## Beschreibung

Die Erfindung betrifft ein Lichtmodul, insbesondere für eine KraftfahrzeugBeleuchtungseinrichtung, sowie ein Verfahren zu dessen Betrieb.

### STAND DER TECHNIK

Adaptive "intelligente" Scheinwerfersysteme finden in modernen Kraftfahrzeugen Verwendung, um die Fahrzeugsicherheit und den Fahrkomfort zu erhöhen. Diese Systeme nutzen diverse Sensortechnologien zur Erfassung der Fahrumgebung, intelligente Steuerungen und Scheinwerfer mit adaptiven Lichtmodulen, um die Beleuchtung der Fahrbahn in Echtzeit an wechselnde Fahrsituationen anzupassen. Ein zentrales Merkmal adaptiver intelligenter Scheinwerfersysteme ist ihre Fähigkeit, die auf die Fahrbahn und die sonstige Fahrumgebung projizierte Lichtverteilung dynamisch zu modifizieren. Durch den Einsatz von Sensoren wie Kameras, Lidar und Radar können diese Systeme nicht nur den Verkehr und die Umgebung erfassen, sondern auch spezifische Parameter wie Geschwindigkeit, Lenkbewegungen und Wetterbedingungen berücksichtigen. Diese Informationen werden von einer intelligenten Steuerung verarbeitet, die daraufhin die Lichtmodule zur Erzeugung einer bedarfsangepassten Beleuchtung ansteuert, d.h., zur Erzeugung eines hinsichtlich Intensität und räumlich-zeitlicher Verteilung optimierten Lichtfelds.

Bei den zugrundeliegenden adaptiven Lichtmodulen sind im Stand der Technik unterschiedliche Konzepte bekannt.

Matrix-LED Lichtmodule umfassen eine Vielzahl einzelner LED-Leuchtmittel, die in einem Matrix-Layout angeordnet sind. Jede LED ist separat steuerbar und kann unabhängig von den anderen geregelt werden. Durch gezieltes Dimmen oder Ausschalten einzelner LEDs kann das erzeugte Lichtmuster dynamisch angepasst werden.

Weiterhin sind adaptive Lichtmodule basierend auf Mikrospiegel-Modulen bekannt, die matrixförmig angeordnete und individuell verkippbare Mikrospiegel auf einem Chip umfassen. Derartige Mikrospiegel-Module finden beispielsweise Verwendung in der digitalen Projektion, etwa in Videoprojektoren ("Beamer"). Die Mikrospiegel werden vorderseitig angeleuchtet und reflektieren das eingestrahlte Licht je nach Kippwinkel in Richtung einer Projektionsoptik zur Ausleuchtung der Fahrumgebung oder in eine absorbierende Lichtfalle unter Bildung eines "schwarzen Pixels".

Zudem sind Scheinwerfer mit adaptiven Lichtmodulen basierend auf LCD-Display-Technologie bekannt.

### OFFENBARUNG DER ERFINDUNG

Es ist die Aufgabe der vorliegenden Erfindung, eine alternative Ausführungsform eines Lichtmoduls vorzuschlagen, die sich insbesondere durch eine geringe Leistungsaufnahme auszeichnet.

Diese Aufgabe wird gelöst von einem Lichtmodul gemäß Anspruch 1 und einem Verfahren zu dessen Betrieb gemäß Anspruch 12. Vorteilhafte Weiterbildungen der Erfindung sind in den abhängigen Ansprüchen angegeben.

Die Erfindung schließt die technische Lehre ein, dass das Lichtmodul wenigstens umfasst:
- eine Beleuchtungseinheit, die insbesondere zur Erzeugung einer homogenen Ausleuchtung ausgebildet ist,
- ein erstes Mikrospiegel-Modul mit einer Lichteintrittsseite, die von der Beleuchtungseinheit ausleuchtbar ist, mit einer der Lichteintrittsseite gegenüberliegenden ersten Lichtaustrittsseite und mit einer zweiten Lichtaustrittsseite, wobei das erste Mikrospiegel-Modul eine Mehrzahl von Mikrospiegeln aufweist, die jeweils zwischen einer geöffneten Stellung und wenigstens einer teilgeschlossenen Stellung verstellbar sind, wobei von der Beleuchtungseinheit ausgesandtes Licht bei geöffneter Stellung unreflektiert aus der ersten Lichtaustrittsseite austritt und zur Beleuchtung eines Vorfelds des Lichtmoduls nutzbar ist, und wobei von der Beleuchtungseinheit ausgesandtes Licht bei teilgeschlossener Stellung an den Mikrospiegeln in Richtung der zweiten Lichtaustrittsseite reflektiert wird, und
- einen Reflektor, der derart zu dem ersten Mikrospiegel-Modul angeordnet ist, dass er von aus der zweiten Lichtaustrittsseite austretendem Licht beleuchtbar ist und dieses derart reflektiert, dass es zur Beleuchtung des Vorfelds des Lichtmoduls nutzbar ist.

Der Grundgedanke der Erfindung besteht darin, die adaptive Vorfeldbeleuchtung mittels einer Kombination aus einem Mikrospiegel-Modul und einem separaten Reflektor zu realisieren, wobei sowohl das durch das Mikrospiegel-Modul bei geöffneten Spiegelstellungen transmittierte Licht als auch das bei teilgeschlossenen Stellungen an den Mikrospiegeln reflektierte Licht via des Reflektors zur Beleuchtung beitragen. Bei Verwendung des erfindungsgemäßen Lichtmoduls für Frontscheinwerfer eines Kraftfahrzeugs kann der Reflektor zur Ausleuchtung des Nahfelds, d.h., des unmittelbar vor dem zugehörigen Kraftfahrzeug liegenden Straßenabschnitts, eingerichtet sein, und beispielsweise beim adaptiven Ausblenden eines entgegenkommenden Fahrzeugs in weiter entfernten Bereichen des Vorfelds mittels teilweisem Schließens einzelner Mikrospiegel werden die entsprechenden Lichtanteile über den Reflektor zur verbesserten Nahfeldausleuchtung verwendet. Somit kann erfindungsgemäß im Wesentlichen stets der gesamte Lichtstrom der Beleuchtungseinheit zur variablen Vorfeldbeleuchtung genutzt werden. Hinsichtlich der Effizienz des Lichtmoduls stellt dies einen Vorteil gegenüber adaptiven Lichtmodulen mit Mikrospiegel-Modulen aus dem Stand der Technik dar, die ausschließlich in Reflexion betrieben werden und eine verlustbehaftete Lichtfalle zum Ausblenden von Lichtanteilen ("schwarze Pixel") verwenden.

Bei geöffneter Stellung der Mikrospiegel wird das erste Mikrospiegel-Modul in Transmission betrieben, d.h., dass das durch die Lichteintrittsseite einfallende Licht ohne Reflexion an den Mikrospiegeln durch die erste Lichtaustrittsseite austritt. In Bezug auf eine vorgesehene Einbaulage des Lichtmoduls in einem Kraftfahrzeug ist der Reflektor insbesondere unterhalb des ersten Mikrospiegel-Moduls angeordnet, und die zweite Lichtaustrittsseite befindet sich unterseitig des ersten Mikrospiegel-Moduls. Insbesondere umfasst das Lichtmodul eine Projektionsoptik, die dem ersten Mikrospiegel-Modul und/oder dem Reflektor nachgelagert zugeordnet ist und die jeweiligen Lichtanteile in das Vorfeld des Lichtmoduls projiziert. Die Reflektoroberfläche ist beispielsweise als eine Parabolrinne ausgebildet oder weist eine komplexere Freiform auf.

Die Mikrospiegel sind individuell ansteuerbar und können voneinander unabhängig zwischen der geöffneten und mindestens einer teilgeschlossenen Stellung verstellt werden. In teilgeschlossener Stellung wird das einfallende Licht in Richtung der zweiten Lichtaustrittsseite reflektiert. Das auf jeden Mikrospiegel durch die Lichteintrittsseite einfallende Licht kann somit wahlweise unreflektiert transmittiert oder über Reflexion am teilgeschlossenen Mikrospiegel und anschließende Reflexion am Reflektor umgelenkt werden. Die Mikrospiegel liegen insbesondere in einer matrixförmigen Anordnung vor.

Die eingangsseitig des ersten Mikrospiegel-Moduls angeordnete Beleuchtungseinheit umfasst beispielsweise ein Leuchtmittel basierend auf einem leistungsstarken Leuchtdioden-Modul sowie einen zugehörigen Reflektor, der dazu eingerichtet ist, das von dem Leuchtmittel emittierte Licht zur flächig homogenen Ausleuchtung der Lichteintrittsseite des ersten Mikrospiegel-Moduls umzulenken.

Das erfindungsgemäße Lichtmodul kann außer der Verwendung in einer Kraftfahrzeugbeleuchtungseinrichtung für zahlreiche weitere Anwendungen zweckmäßig eingesetzt werden, insbesondere in digitalen Videoprojektoren oder als Spotlicht für die Raumbeleuchtung mit komplexen Lichtmustern oder Symbolen, beispielsweise zur Erzeugung von Richtungsweisern in Büro- oder Geschäftsräumlichkeiten oder zur Erzeugung von Lichteffekten bei Veranstaltungen.

In einer vorteilhaften Ausführungsform des Lichtmoduls umfasst der Reflektor ein zweites Mikrospiegel-Modul, das wenigstens einen Abschnitt der Reflektoroberfläche bildet, wobei das zweite Mikrospiegel-Modul eine Mehrzahl von Mikrospiegeln aufweist, die zur variablen Beleuchtung des Vorfelds des Lichtmoduls jeweils zwischen mehreren Stellungen verstellbar sind. Insbesondere kann die gesamte Reflektoroberfläche durch die Mikrospiegel des zweiten Mikrospiegel-Moduls gebildet sein. Je nach Stellung der Mikrospiegel wird das auf das zweite Mikrospiegel-Modul einfallende Licht in unterschiedliche Bereich des Vorfelds des Lichtmoduls reflektiert. Durch die individuelle Verstellbarkeit der Mikrospiegel ist somit ein weiterer Freiheitsgrad zur Erzeugung adaptiver, komplexer Lichtverteilungen gegeben.

Beispielsweise sind die Mikrospiegel des ersten Mikrospiegel-Moduls derart ausgebildet und zueinander angeordnet, dass es teilgeschlossene Stellungen gibt, bei denen eine doppelte Lichtreflexion erfolgt, derart, dass von einer Vorderseite eines ersten Mikrospiegels in Richtung der zweiten Lichtaustrittsseite reflektiertes Licht von einer Rückseite eines zweiten Mikrospiegels in Richtung der ersten Lichtaustrittsseite reflektiert wird. Zu diesem Zweck weisen die Mikrospiegel spiegelnde Oberflächen sowohl auf der Vorderseite als auch auf der Rückseite auf. Insbesondere findet die doppelte Lichtreflexion zwischen unmittelbar benachbarten Mikrospiegeln statt. Durch die doppelte Lichtreflexion kann beispielsweise eine Superposition im Vorfeld erzeugt werden, wodurch die Lichtintensität in ausgewählten Bereichen erhöht werden kann.

In einer weiteren Ausführungsform umfasst das erfindungsgemäße Lichtmodul ein optoelektronisches Sensormodul zur Funktionsdiagnose, das derart zu dem ersten Mikrospiegel-Modul angeordnet ist, dass es von aus der zweiten Lichtaustrittsseite austretendem Licht beleuchtbar ist. Das Sensormodul dient zur Funktionsdiagnose der Mikrospiegel des ersten Mikrospiegel-Moduls. Es ist daher derart angeordnet, dass es bei bestimmten teilgeschlossenen Stellungen der Mikrospiegel von diesen beleuchtet wird. Das Sensormodul ist insbesondere unmittelbar benachbart zu dem Reflektor angeordnet oder in diesen baulich integriert. Das Sensormodul basiert beispielsweise auf einem CMOS-Sensor oder einem CCD-Sensor.

In einer Ausführungsform weist das erste Mikrospiegel-Modul eine zweite Gruppe von Mikrospiegeln auf, wobei die Mikrospiegel der zweiten Gruppe jeweils zwischen einer geöffneten Stellung und wenigstens einer teilgeschlossenen Stellung verstellbar sind, wobei von der Beleuchtungseinheit ausgesandtes Licht bei geöffneter Stellung unreflektiert aus der ersten Lichtaustrittsseite austritt und zur Beleuchtung eines Vorfelds des Lichtmoduls nutzbar ist, und wobei von der Beleuchtungseinheit ausgesandtes Licht bei teilgeschlossener Stellung an den Mikrospiegeln der zweiten Gruppe in Richtung eines dritten Mikrospiegel-Moduls reflektiert wird, wobei das dritte Mikrospiegel-Modul eine Mehrzahl von Mikrospiegeln aufweist, die zur variablen Beleuchtung des Vorfelds des Lichtmoduls jeweils zwischen mehreren Stellungen verstellbar sind. In Bezug auf eine vorgesehene Einbaulage des Lichtmoduls in einem Kraftfahrzeug ist das dritte Mikrospiegel-Modul insbesondere oberhalb des ersten Mikrospiegel-Moduls angeordnet, sodass vorzugsweise zu den mittels des Reflektors ausleuchtbaren Bereichen komplementäre Bereiche des Vorfelds ausleuchtbar sind. Optional ist ein zweites optoelektronisches Sensormodul zur Funktionsdiagnose vorgesehen, das derart zu dem ersten Mikrospiegel-Modul angeordnet ist, dass es von Mikrospiegeln der zweiten Gruppe in teilgeschlossenen Stellungen beleuchtbar ist. Das zweite Sensormodul ist insbesondere unmittelbar benachbart zu dem dritten Mikrospiegel-Modul angeordnet oder in dieses baulich integriert.

Das erste Mikrospiegel-Modul weist insbesondere einen lichtdurchlässigen Trägerkörper auf, wobei eine erste Gruppe von Mikrospiegeln auf einer der Lichteintrittsseite zugewandten Seite des Trägerkörpers angeordnet ist, und wobei die zweite Gruppe von Mikrospiegeln auf einer der ersten Lichtaustrittsseite zugewandten Seite des Trägerkörpers angeordnet ist. In teilgeschlossenen Stellungen reflektieren die Mikrospiegel der ersten Gruppe das von der Beleuchtungseinheit eingestrahlte Licht in Richtung der zweiten Lichtaustrittsseite, und die Mikrospiegel der zweiten Gruppe reflektieren in Richtung des dritten Mikrospiegel-Moduls.

Der Trägerkörper mit den darauf angeordneten Mikrospiegeln kann beispielsweise randseitig gewölbt sein, um einem astigmatischen Abbildungsfehler beim Lichtdurchgang durch eine nachfolgende Projektionsoptik zu verringern.

Insbesondere weisen die Mikrospiegel des ersten Mikrospiegel-Moduls, des zweiten Mikrospiegel-Moduls und/oder des dritten Mikrospiegel-Moduls jeweils einen zumindest einseitig verspiegelten Blattabschnitt auf, der um eine erste Schwenk- oder Drehachse und/oder um eine zweite Schwenk- oder Drehachse verstellbar ist, wobei in Bezug auf eine vorgesehene Einbaulage des Lichtmoduls, insbesondere in einer KraftfahrzeugBeleuchtungseinrichtung, die erste Schwenk- oder Drehachse horizontal und die zweite Schwenk- oder Drehachse vertikal orientiert ist. Bei Verstellung der Mikrospiegel um die erste Achse erfolgt somit eine vertikale Verlagerung des zugehörigen Lichtkegels im Vorfeld des Lichtmoduls entsprechend einer Leuchtweitenregulierung, und bei Verstellung um die zweite Achse resultiert eine horizontale Ablenkung, insbesondere zur Bildung eines Kurvenfahrlichts oder zum Ausleuchten von Schildern am Fahrbahnrand.

Die Verstellung der Mikrospiegel basiert vorzugsweise auf einem elektrostatischen Wirkprinzip, wozu die Trägerkörper der Mikrospiegel-Module ein elektrisch leitfähiges Material aufweisen, beispielsweise optisch transparentes Indiumzinnoxid, und die Mikrospiegel Elektroden aufweisen oder bilden, wobei eine steuerbare Spannungsquelle zum Anlegen von elektrischen Spannungssignalen zwischen den Trägerkörpern und den Elektroden der Mikrospiegel vorgesehen ist. Durch Erzeugen einer elektrischen Potentialdifferenz mittels der Spannungsquelle ist eine elektrostatische Kraft zwischen den Mikrospiegeln und den Trägerkörpern erzeugbar.

Die Verstellbarkeit der Mikrospiegel basiert weiterhin auf einer zweckmäßigen Lagerung. Beispielsweise weist jeder Mikrospiegel einen planen Blattabschnitt mit einer spiegelnden Vorderseite und/oder einer spiegelnden Rückseite auf, wobei jeder Mikrospiegel mittels eines randseitigen Befestigungsabschnitts scharnierartig auf dem Trägerkörper angeordnet ist, derart, dass jeder Blattabschnitt ausgehend von einer geöffneten Stellung, in der der Blattabschnitt im Wesentlichen lotrecht von der Oberfläche des Trägerkörpers abragt, in Richtung der Oberfläche des Trägerkörpers in teilgeschlossene Stellungen schwenkbar ist. Insbesondere weisen derartig schwenkbare Mikrospiegel einen Schichtaufbau auf, welcher wenigstens eine druckverspannte Schicht und eine zugverspannte Schicht umfasst, wobei entlang des Blattabschnitts jedes Mikrospiegels eine druckverspannte Kompensationsschicht auf der zugverspannten Schicht angeordnet ist, derart, dass jeder Mikrospiegel in die folgenden Abschnitte unterteilt ist:
- den Blattabschnitt, welcher global spannungsfrei ausgebildet ist und zwei im Wesentlichen planparallele Oberflächen aufweist,
- den randseitigen Befestigungsabschnitt, welcher starr auf dem Trägerkörper des Mikrospiegel-Moduls angeordnet ist, und
- einen dazwischenliegenden Scharnierabschnitt, welcher eine eigenspannungsinduzierte Krümmung aufweist, wodurch die geöffnete Stellung des Mikrospiegels gebildet ist.

Ohne anliegende elektrische Spannung befinden sich die Mikrospiegel in der geöffneten Stellung, die aufgrund der vorliegenden mechanischen Eigenspannungen durch eine Krümmung des Scharnierabschnitts zwischen dem auf dem Trägerkörper stoffschlüssig fixierten Befestigungsabschnitt und dem spannungskompensierten Blattabschnitt zustande kommt. Beispielsweise weist der Scharnierabschnitt dabei einen Krümmungsradius auf, welcher ein Hundertstel bis ein Drittel der Kantenlänge der Mikrospiegel beträgt. Ausgehend von der geöffneten Stellung der Mikrospiegel kann durch Anlegen einer elektrischen Spannung zwischen Trägerkörper und Elektroden ein teilweises Schließen der Mikrospiegel erfolgen, bis dass die elektrostatische Anziehungskraft durch die entgegenwirkende Eigenspannung im Scharnierabschnitt kompensiert wird. Beim Überschreiten einer Grenzspannung erfolgt die Einnahme einer vollständig geschlossenen Stellung, in der der Blattabschnitt plan am Trägerkörper anliegt. Die gezielte Lichtlenkung mittels der Mikrospiegel-Module basiert auf der Ansteuerung der einzelnen Mikrospiegel zur Einnahme zweckmäßiger Stellungen. Weitere Details zum Aufbau und Aktuierungsprinzip derartiger Mikrospiegel sind in der Druckschrift EP 4 102 024 A1 offenbart.

Elektrostatisch aktuierbare Mikrospiegel, die um zwei orthogonale Schwenkachsen schwenkbar sind, sind beispielsweise in der Druckschrift DE 103 58 967 A1 offenbart.

Es ist vorgesehen, dass der Verstellbereich der Mikrospiegel um eine vertikale Schwenk- oder Drehachse, etwa zur Erzeugung einer Kurvenlichtfunktion, einen Winkelbereich von bis zu 30° abdeckt, insbesondere von 10° bis 20°.

Mikrospiegel-Module der vorbezeichneten Ausführungsformen zeichnen sich durch eine geringe Leistungsaufnahme aus, die bei ständiger Aktuierung beispielsweise im Bereich von 0,05 - 0,2 W/m² liegt. Zudem liegen die Schaltzeiten beim Wechsel der Stellungen der Mikrospiegel in der Größenordnung von lediglich 1 - 100 Mikrosekunden (je nach Bauform), sodass eine hochdynamische Anpassung der Vorfeldbeleuchtung an rasch wechselnde Gegebenheiten erzeugbar ist.

Die Kantenlängen der Mikrospiegel des ersten Mikrospiegel-Moduls, des zweiten Mikrospiegel-Moduls und/oder des dritten Mikrospiegel-Moduls können zweckmäßig aus einem Bereich zwischen wenigen Mikrometern und einigen Millimetern gewählt werden, beispielsweise zwischen 10 Mikrometern und 10 Millimetern.

In einer weiteren Ausführungsform des erfindungsgemäßen Lichtmoduls weist das erste Mikrospiegel-Modul eine der Anzahl der Mikrospiegel entsprechende Anzahl von Mikrosammellinsen auf, wobei jedem Mikrospiegel eine Mikrosammellinse zugeordnet ist, wobei die Mikrosammellinsen zwischen der Lichteintrittsseite und den Mikrospiegeln angeordnet sind, derart, dass jeder Mikrospiegel zwischen der jeweils zugeordneten Mikrosammellinse und deren hinterer Brennebene angeordnet ist. Die optische Achse jeder Mikrosammellinse verläuft dabei durch den zentralen Bereich des durch den zugeordneten Mikrospiegel gebildeten "Pixels". Die Mikrosammellinsen erzeugen eine Bündelung des von der Beleuchtungseinheit eingestrahlten Lichts auf den aktiven Bereich der Mikrospiegel, d.h., dass bei geöffneter Stellung im Wesentlichen der gesamte Lichtstrom transmittiert wird (vermindert nur um Absorption beim Durchgang durch den Trägerkörper) und durch die erste Lichtaustrittsseite austritt, und bei teilgeschlossener Stellung im Wesentlichen der gesamte Lichtstrom an den Mikrospiegeln reflektiert wird und durch die zweite Lichtaustrittsseite austritt bzw. in Richtung des dritten Mikrospiegel-Moduls gelenkt wird. Unerwünschte Lichtverluste durch parasitäre Absorption, etwa am elektrischen Zuleitungssystem der Mikrospiegel, können durch die Verwendung der Mikrosammellinsen signifikant verringert werden.

Insbesondere ist das erfindungsgemäße Lichtmodul als ein Frontscheinwerfer für ein Kraftfahrzeug ausgebildet, umfassend eine Projektionsoptik zur Lichtprojektion in das Vorfeld des Kraftfahrzeugs und ein Steuergerät, das zu einer derartigen Steuerung der Mikrospiegel des ersten Mikrospiegel-Moduls, des zweiten Mikrospiegel-Moduls und/oder des dritten Mikrospiegel-Moduls ausgebildet ist, dass mittels des Frontscheinwerfers eine selektive Mehrfeldausleuchtung des Vorfelds des Kraftfahrzeugs erzeugbar ist, insbesondere zur Bildung eines Fernlichts, eines Abblendlichts, eines Tagfahrlichts, eines Kurvenlichts, zur Signalprojektion und/oder zur selektiven Objektausleuchtung. In Kombination mit zweckmäßiger Sensorik zur Umgebungserfassung, etwa Lidarsensoren und Kameras, ist das Lichtmodul in der Lage, die Beleuchtung von Fahrbahn und Umgebung in Echtzeit an wechselnde Fahr- und Verkehrssituationen anzupassen.

In einer weiteren Ausführungsform ist das erfindungsgemäße Lichtmodul als eine Heckleuchte für ein Kraftfahrzeug ausgebildet, umfassend eine Anzeigeeinheit mit einem Lichtleitkörper, der eine segmentierte Leuchtfläche und eine korrespondierend segmentierte Lichteintrittsfläche aufweist, wobei die Lichteintrittsfläche mit von der Beleuchtungseinheit ausgesandtem Licht über das erste Mikrospiegel-Modul, den Reflektor, das zweite Mikrospiegel-Modul und/oder das dritte Mikrospiegel-Modul beleuchtbar ist, weiterhin umfassend ein Steuergerät, das zu einer derartigen Steuerung der Mikrospiegel des ersten Mikrospiegel-Moduls, des zweiten Mikrospiegel-Moduls und/oder des dritten Mikrospiegel-Moduls ausgebildet ist, dass zur Bildung eines Rücklichts, eines Bremslichts oder eines Fahrtrichtungsanzeigers und/oder zur Erzeugung von optischen Signalen auf der segmentierten Leuchtfläche eine selektive Beleuchtung der Lichteintrittsfläche erzeugbar ist. Jedes Segment der Lichteintrittsfläche des Lichtleitkörpers ist einem Segment der Leuchtfläche zugeordnet. Beispielsweise weist die Leuchtfläche eine rechteckige Kontur und eine Segmentierung in matrixförmig angeordnete Bildpunkte (Pixel) auf. Jedes pixelförmige Segment der Leuchtfläche bildet eine Lichtauskopplungsfläche des Lichtleitkörpers und kann über das jeweils zugehörige Segment der Lichteintrittsfläche beleuchtet werden. Durch zweckmäßige Steuerung des Lichtmoduls kann ein Segment der Lichteintrittsfläche wahlweise unbeleuchtet sein oder das von einem Mikrospiegel oder von mehreren Mikrospiegeln reflektierte Licht empfangen, sodass das zugehörige Segment der Leuchtfläche in mehreren Intensitätsstufen erstrahlen kann. Weitere Variationsmöglichkeiten ergeben sich durch einen gepulsten Betrieb der Beleuchtungseinheit und/oder zweckmäßige Pulsweitenmodulationen in der elektrostatischen Aktuierung der Mikrospiegel.

Beispielsweise weist die Anzeigeeinheit ein Anzeigeelement mit einer unsegmentierten Leuchtfläche auf, die mit von der Beleuchtungseinheit ausgesandtem Licht über das erste Mikrospiegel-Modul, den Reflektor, das zweite Mikrospiegel-Modul und/oder das dritte Mikrospiegel-Modul beleuchtbar ist. Das Anzeigeelement ist insbesondere als ein Reflektor ausgebildet, wobei die Leuchtflächen des Lichtleitkörpers und des Anzeigeelement eine ähnliche Kontur aufweisen und übereinander angeordnet sind.

Weiterhin betrifft die Erfindung ein Verfahren zum Betrieb eines Lichtmoduls nach einer der vorgenannten Ausführungsformen, wobei die Beleuchtungseinheit betrieben wird und die Mikrospiegel des ersten Mikrospiegel-Moduls, des zweiten Mikrospiegel-Moduls und/oder des dritten Mikrospiegel-Moduls mittels eines Steuergeräts fortlaufend zur Einnahme von zweckmäßigen Stellungen angesteuert werden, derart, dass eine gewünschte Beleuchtung des Vorfelds des Lichtmoduls erzeugt wird, insbesondere eine dynamische, selektive Mehrfeldausleuchtung.

Insbesondere kann im Rahmen des erfindungsgemäßen Verfahrens eine Funktionsdiagnose des ersten Mikrospiegel-Moduls durchgeführt werden, indem dessen Mikrospiegel sequenziell oder gruppenweise zur Einnahme von teilgeschlossenen Stellungen angesteuert werden, in denen von der Beleuchtungseinheit ausgesandtes Licht durch die zweite Lichtaustrittsseite auf das optoelektronische Sensormodul reflektiert wird, und die dabei von dem Sensormodul empfangenen Lichteindrücke mit zugehörigen Sollwerten verglichen werden. Dadurch ist es möglich, schadhafte Mikrospiegel zu identifizieren, die beispielsweise nicht (mehr) in ihre jeweiligen Sollstellungen verbringbar sind. Das Lichtmodul kann basierend auf einer derartigen Funktionsdiagnose als ein fehlertolerantes Regelsystem ausgebildet sein, wobei nach der Identifikation von schadhaften Mikrospiegeln deren Funktion durch andere Mikrospiegel ausgeübt wird.

### AUSFÜHRUNGSBEISPIELE DER ERFINDUNG

Weitere, die Erfindung verbessernde Maßnahmen werden nachstehend gemeinsam mit der Beschreibung von Ausführungsbeispielen der Erfindung anhand der Figuren näher dargestellt. Es zeigt in schematischer Form:
- Fig. 1:: ein erstes Ausführungsbeispiel eines als Frontscheinwerfer ausgebildeten Lichtmoduls,
- Fig. 2:: ein zweites Ausführungsbeispiel,
- Fig. 3:: ein drittes Ausführungsbeispiel,
- Fig. 4:: einen Reflektor eines Ausführungsbeispiels,
- Fig. 5:: ein viertes Ausführungsbeispiel,
- Fig. 6:: ein fünftes Ausführungsbeispiel,
- Fig. 7a-e:: ein erstes Ausführungsbeispiel eines als Heckleuchte ausgebildeten Lichtmoduls,
- Fig. 8:: ein zweites Ausführungsbeispiel, und
- Fig. 9a,b:: ein drittes Ausführungsbeispiel.

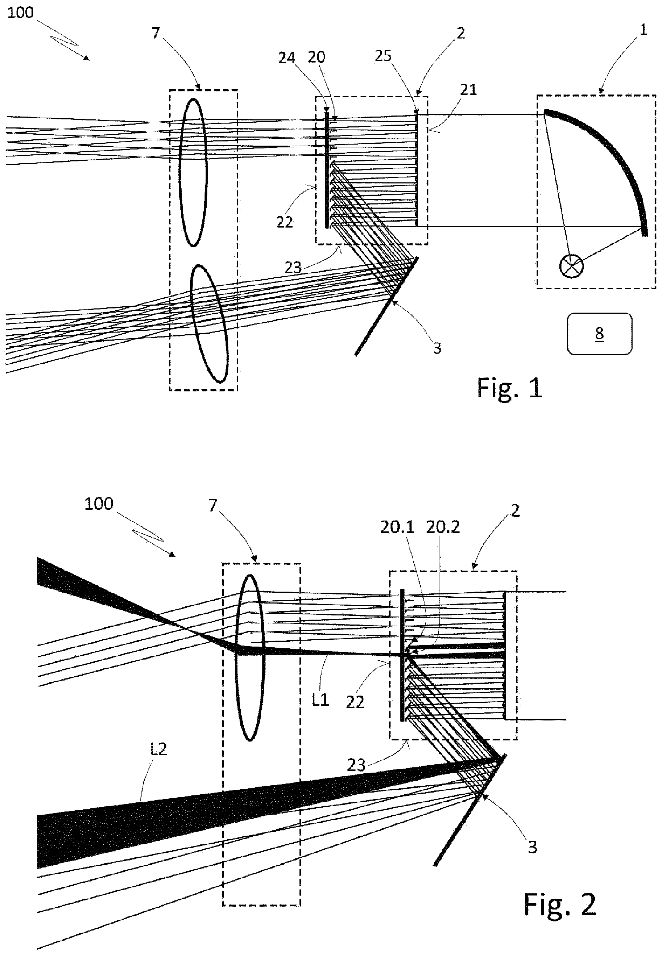

Fig. 1, Fig. 2, Fig. 3, Fig. 5 und Fig. 6 zeigen schematische Schnittansichten des erfindungsgemäßen Lichtmoduls 100 in unterschiedlichen Ausführungsbeispielen, jeweils ausgebildet als Frontscheinwerfer für ein Kraftfahrzeug. Die lediglich in Fig. 1 beispielhaft dargestellte Beleuchtungseinheit 1 sei in allen genannten Figuren im Betrieb und der Verlauf des emittierten Lichts durch das Lichtmodul 100 und in dessen Vorfeld ist jeweils anhand ausgewählter Randstrahlen der gebildeten Lichtkegel dargestellt. Alle dargestellten Mikrospiegel 20, 40, 60 weisen wenigstens eine senkrecht zur Bildebene orientierte Schwenkachse auf.

Fig. 1 zeigt ein erstes Ausführungsbeispiel des erfindungsgemäßen Lichtmoduls 100, ausgebildet als ein Frontscheinwerfer für ein Kraftfahrzeug, umfassend die Beleuchtungseinheit 1, das erste Mikrospiegel-Modul 2, den Reflektor 3, die Projektionsoptik 7 sowie das Steuergerät 8.

Die Beleuchtungseinheit 1 umfasst beispielhaft ein Leuchtmittel mit zugehörigem Reflektor und ist somit zur Erzeugung einer homogenen Ausleuchtung ausgebildet. Die Beleuchtungseinheit 1 ist derart angeordnet, dass die Lichteintrittsseite 21 des ersten Mikrospiegel-Moduls 2 von der Beleuchtungseinheit 1 homogen ausleuchtbar ist.

Das erste Mikrospiegel-Modul 1 weist die Mikrospiegel 20 auf, die jeweils zwischen einer geöffneten Stellung und wenigstens einer teilgeschlossenen Stellung verstellbar sind, wobei das von der Beleuchtungseinheit 1 ausgesandte Licht bei geöffneter Stellung unreflektiert aus der ersten Lichtaustrittsseite 22 austritt und zur Beleuchtung des Vorfelds des Lichtmoduls 100 nutzbar ist, und wobei das von der Beleuchtungseinheit 1 ausgesandte Licht bei teilgeschlossener Stellung an den Mikrospiegeln 20 in Richtung der zweiten Lichtaustrittsseite 23 reflektiert wird. In der schematischen Darstellung der Fig. 1 sind die fünf oberen Mikrospiegel 20 geöffnet und die übrigen nehmen teilgeschlossene Stellungen ein.

Das erste Mikrospiegel-Modul 2 weist den lichtdurchlässigen Trägerkörper 24 auf, wobei die Mikrospiegel 20 auf einer der Lichteintrittsseite 21 zugewandten Seite des Trägerkörpers 24 angeordnet sind. Die Mikrospiegel 20 weisen jeweils einen zumindest einseitig verspiegelten Blattabschnitt auf, der um eine Schwenkachse (orthogonal zur Zeichnungsebene) schwenkbar ist, wobei die Schwenkachse in Bezug auf eine vorgesehene Einbaulage des Lichtmoduls 100 als Frontscheinwerfer in einem Kraftfahrzeug horizontal orientiert ist.

Das erste Mikrospiegel-Modul 2 weist eine der Anzahl der Mikrospiegel 20 entsprechende Anzahl von Mikrosammellinsen 25 auf, wobei jedem Mikrospiegel 20 eine Mikrosammellinse 25 zugeordnet ist, wobei die Mikrosammellinsen 25 zwischen der Lichteintrittsseite 21 und den Mikrospiegeln 20 angeordnet sind, derart, dass jeder Mikrospiegel 20 zwischen der jeweils zugeordneten Mikrosammellinse 25 und deren hinterer Brennebene angeordnet ist. Dadurch erfolgt eine zweckmäßige Bündelung der auf die einzelnen Mikrospiegel 20 einfallenden Lichtbündel, und unerwünschte Lichtabsorption an nicht aktiven Bereichen, etwa an den randseitigen Befestigungsabschnitten der Mikrospiegel 20, wird unter Verbesserung der Effizienz des Lichtmoduls 100 vermindert.

Der Reflektor 3 ist derart zu dem ersten Mikrospiegel-Modul 2 angeordnet ist, dass er von dem aus der zweiten Lichtaustrittsseite 23 austretendem Licht beleuchtet wird und dieses derart reflektiert, dass es zur Beleuchtung des Vorfelds des Lichtmoduls 100 nutzbar ist. Die Superposition der Lichtanteile, die die geöffneten Mikrospiegeln 20 unreflektiert passieren oder über die teilgeschlossenen Mikrospiegel 20 und den Reflektor 3 umgelenkt werden, ergibt nach Durchlaufen der Projektionsoptik 7 die gesamte Vorfeldbeleuchtung.

Das auf nicht dargestellte Weise mit der Beleuchtungseinheit 1 und dem ersten Mikrospiegel-Modul 2 verbundene Steuergerät 8 ist zu einer derartigen Steuerung der Mikrospiegel 20 ausgebildet ist, dass mittels des Lichtmoduls 100 eine selektive Mehrfeldausleuchtung des Vorfelds eines zugehörigen Kraftfahrzeugs erzeugbar ist, insbesondere zur Bildung eines Fernlichts, eines Abblendlichts, eines Tagfahrlichts, eines Kurvenlichts, zur Signalprojektion und/oder zur selektiven Objektausleuchtung.

Fig. 2 zeigt einen Ausschnitt eines zweiten Ausführungsbeispiels des erfindungsgemäßen Lichtmoduls 100, wobei die Mikrospiegel 20 des ersten Mikrospiegel-Moduls 2 derart ausgebildet und zueinander angeordnet sind, dass es teilgeschlossene Stellungen gibt, bei denen eine doppelte Lichtreflexion erfolgt, derart, dass von einer Vorderseite eines ersten Mikrospiegels 20.1 in Richtung der zweiten Lichtaustrittsseite 23 reflektiertes Licht von einer Rückseite eines zweiten Mikrospiegels 20.2 in Richtung der ersten Lichtaustrittsseite 22 reflektiert wird. Zu diesem Zweck sind sowohl die Vorderseiten als auch die Rückseiten der Mikrospiegel 20 spiegelnd ausgebildet. Die am Mikrospiegel 20.2 reflektierten Lichtanteile sind in Fig. 2 als schwarz ausgefüllte Lichtkegel L1 und L2 dargestellt. Der Lichtkegel L1 stammt aus Reflexion an der Vorderseite des Mikrospiegels 20.1 und anschließender Reflexion an der Rückseite des Mikrospiegels 20.2. Der Lichtkegel L2 stammt aus Reflexion an der Vorderseite des Mikrospiegels 20.2. und anschließender Reflexion am Reflektor3.

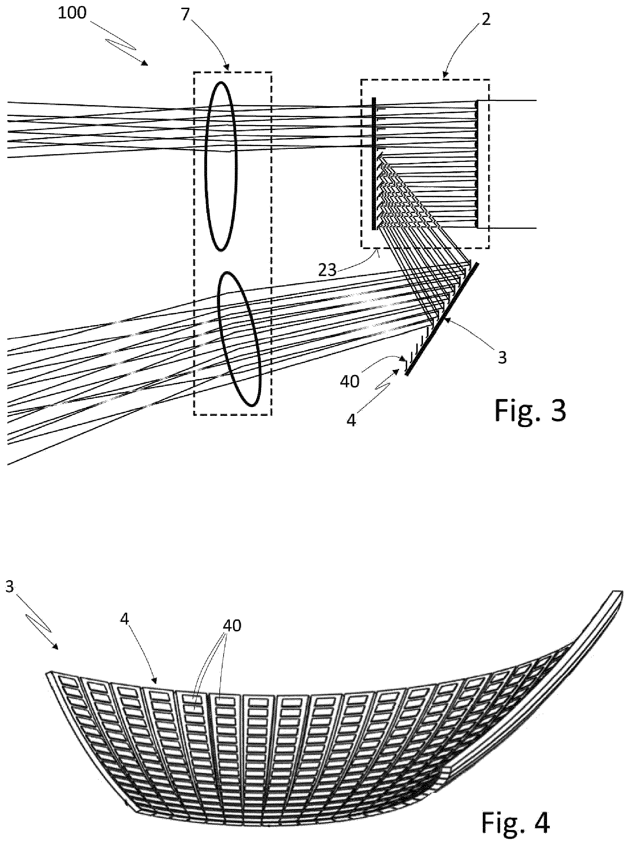

Fig. 3 zeigt einen Ausschnitt eines dritten Ausführungsbeispiels des erfindungsgemäßen Lichtmoduls 100, wobei der Reflektor 3 ein zweites Mikrospiegel-Modul 4 umfasst, das die Reflektoroberfläche bildet und eine Mehrzahl von Mikrospiegeln 40 aufweist, die zur variablen Beleuchtung des Vorfelds des Lichtmoduls 100 jeweils zwischen mehreren Stellungen verstellbar sind.

Fig. 4 zeigt eine perspektivische Ansicht eines Reflektors 3 zur Verwendung in einem erfindungsgemäßen Lichtmodul. Der Reflektor 3 weist eine kalottenförmige Gestalt auf, und die Reflektoroberfläche ist vollständig durch das zweite Mikrospiegel-Modul 4 ausgebildet. Dessen Mikrospiegel 40 sind matrixförmig in Zeilen und Spalten angeordnet und vorliegend in einer neutralen Stellung dargestellt, sodass die durch die Gesamtheit der Mikrospiegel 40 gebildete Reflektoroberfläche im Wesentlich einer Kalotte entspricht. Durch individuelle Verkippung der Mikrospiegel 40 aus dieser Grundstellung können komplexe Lichtmuster im Vorfeld des zugehörigen Lichtmoduls generiert werden.

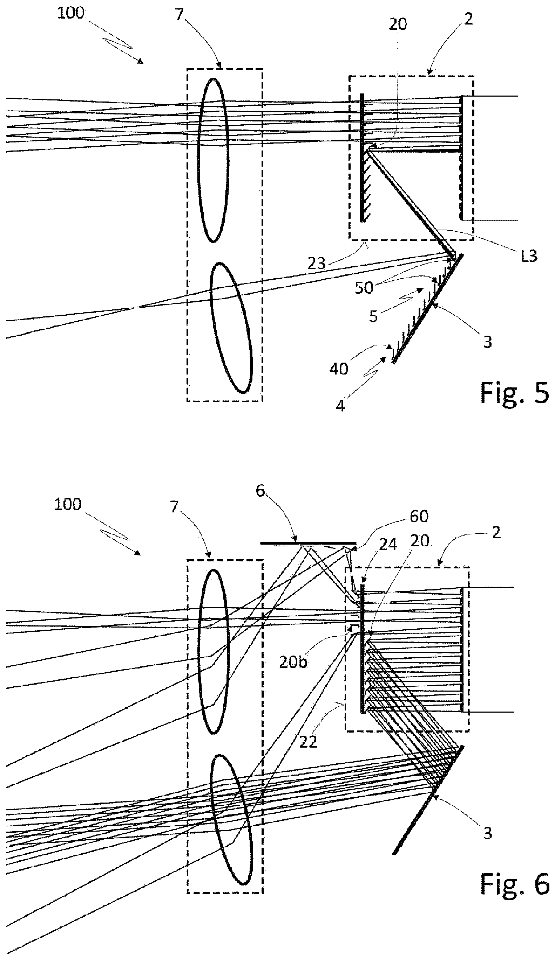

Fig. 5 zeigt einen Ausschnitt eines vierten Ausführungsbeispiels des erfindungsgemäßen Lichtmoduls 100, das das optoelektronische Sensormodul 5 zur Funktionsdiagnose aufweist, das derart zu dem ersten Mikrospiegel-Modul 2 angeordnet ist, dass es von aus der zweiten Lichtaustrittsseite 23 austretendem Licht beleuchtbar ist. Das Sensormodul 5 umfasst beispielhaft eine Mehrzahl von Sensoren 50, die in die randseitigen Befestigungsabschnitte von einzelnen Mikrospiegeln 40 des zweiten Mikrospiegel-Moduls 4 integriert sind. Das Sensormodul 5 ist beispielhaft in den Randbereich des Reflektors 3 integriert und ein Sensor 50 wird durch den von dem Mikrospiegel 20 reflektierten Lichtkegel L3 beleuchtet. Durch Messung der Intensität und/oder Verteilung der auf das Sensormodul 5 auftreffenden Lichtkegel und einem Vergleich mit zugehörigen Sollwerten kann auf den funktionalen Zustand des jeweils überprüften Mikrospiegels 20 geschlossen werden. Weiterhin kann beispielsweise mittels zeitaufgelöster Messungen die Dynamik der Mikrospiegel-Verstellung überprüft werden.

Fig. 6 zeigt einen Ausschnitt eines fünften Ausführungsbeispiels des erfindungsgemäßen Lichtmoduls 100, wobei das erste Mikrospiegel-Modul 2 eine zweite Gruppe von Mikrospiegeln 20b aufweist, die im Unterschied zu den Mikrospiegeln 20 einer ersten Gruppe auf einer der ersten Lichtaustrittsseite 22 zugewandten Seite des lichtdurchlässigen Trägerkörpers 24 angeordnet sind. Die Mikrospiegel 20b sind jeweils zwischen einer geöffneten Stellung und wenigstens einer teilgeschlossenen Stellung verstellbar, wobei von der Beleuchtungseinheit ausgesandtes Licht bei geöffneter Stellung unreflektiert aus der ersten Lichtaustrittsseite 22 austritt, und wobei das Licht bei teilgeschlossener Stellung an den Mikrospiegeln 20b in Richtung des dritten Mikrospiegel-Moduls 6 reflektiert wird. Das dritte Mikrospiegel-Modul 6 weist eine Mehrzahl von Mikrospiegeln 60 aufweist, die zur variablen Beleuchtung des Vorfelds des Lichtmoduls 100, hier vornehmlich des Nahbereichs, jeweils zwischen mehreren Stellungen verstellbar sind.

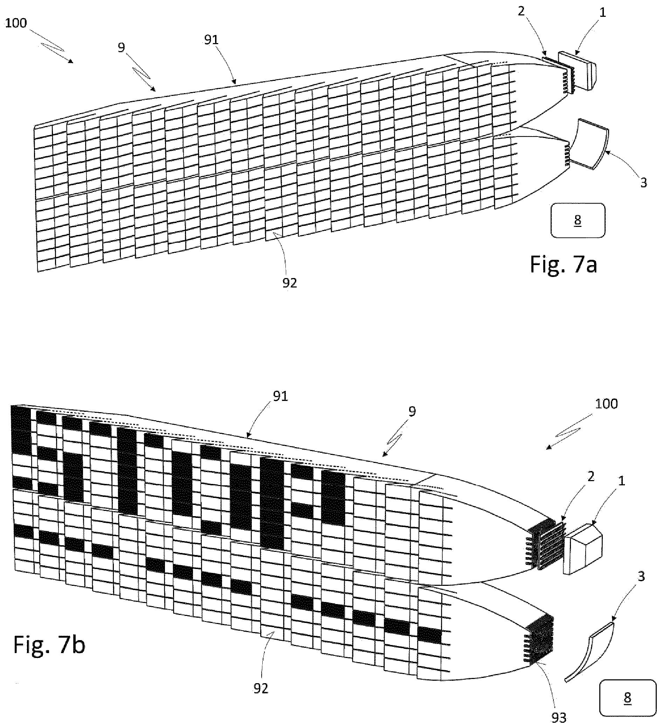

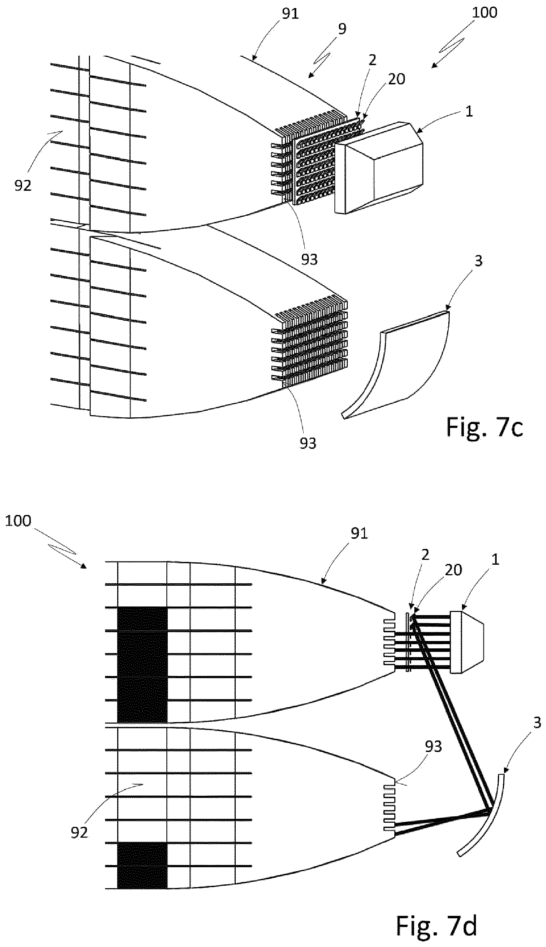

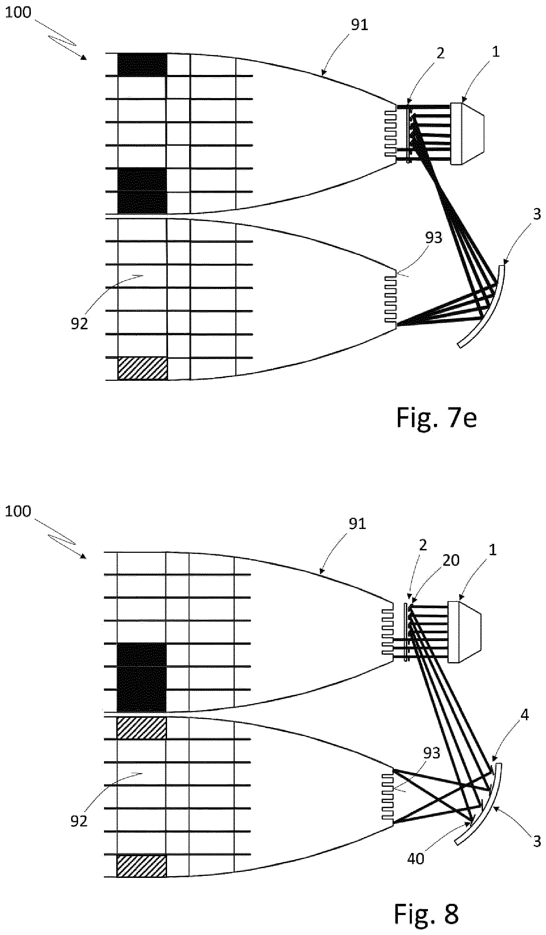

Ein erstes Ausführungsbeispiel des erfindungsgemäßen Lichtmoduls 100, ausgebildet als eine Heckleuchte für ein Kraftfahrzeug, zeigen Fig. 7a bis Fig. 7c (perspektivische Ansichten) sowie Fig. 7d und Fig. 7e (frontale Teilansichten). Lichtbündel sind hier, wie auch in Fig. 8, vereinfacht als schwarze Linien dargestellt.

Das Lichtmodul 100 umfasst die Anzeigeeinheit 9 mit dem Lichtleitkörper 91, der eine segmentierte Leuchtfläche 92 und eine korrespondierend segmentierte Lichteintrittsfläche 93 aufweist, wobei die Lichteintrittsfläche 93 mit von der Beleuchtungseinheit 1 ausgesandtem Licht über das erste Mikrospiegel-Modul 2 und den Reflektor 3 beleuchtbar ist. Die Mikrospiegel 20 sind um eine Schwenkachse senkrecht zur Bildebene schwenkbar. Die Lichteintrittsfläche 93 weist zwei separate Abschnitte auf, die jeweils dem Mikrospiegel-Modul 2 bzw. dem Reflektor 3 zugeordnet sind. Dabei entspricht die Anzahl und Anordnung der einzelnen Segmente in beiden Abschnitten der Lichteintrittsfläche 93 jeweils der Anzahl und Anordnung der Mikrospiegel 20 im ersten Mikrospiegel-Modul 2. Die Leuchtfläche 92 wird durch matrixförmig angeordnete, rechteckige Pixel gebildet, wobei jedes Pixel einem Segment der Lichteintrittsfläche 93 zugeordnet ist, derart, dass in das jeweilige Segment eingestrahltes Licht durch den Lichtleitkörper 91 geleitet und aus dem Pixel der Leuchtfläche 92 ausgekoppelt wird. Die Leuchtfläche 92 weist Stufen auf, wobei jede Stufe eine Spalte bildet, die einer Spalte der matrixförmig segmentierten Lichteintrittsfläche 93 zugeordnet ist.

Das Lichtmodul 100 umfasst weiterhin das Steuergerät 8, das zu einer derartigen Steuerung der Mikrospiegel 20 des ersten Mikrospiegel-Moduls 2 ausgebildet ist, dass zur Bildung eines Rücklichts, eines Bremslichts oder eines Fahrtrichtungsanzeigers und/oder zur Erzeugung von optischen Signalen auf der segmentierten Leuchtfläche 92 eine selektive Beleuchtung der Lichteintrittsfläche 93 erzeugbar ist. Beispielhaft zeigt Fig. 7b die Anzeige des Wortes "STOP" und eines darunter verlaufenden Lichtbands auf der Leuchtfläche, wobei die schwarzen Segmente beleuchtete Segmente darstellen.

Fig. 7d und Fig. 7e zeigen frontale Teilansichten des Lichtmoduls 100 bei unterschiedlichen Stellungen der Mikrospiegel 20, wobei jeweils die Beleuchtung der zweiten Spalte der Leuchtfläche 92 dargestellt ist. Jede Spalte umfasst vierzehn Pixel, von denen je sieben zu einem der beiden Abschnitte der zweiteiligen Lichteintrittsfläche 93 zugeordnet sind.

In Fig. 7d sind die beiden oberen Mikrospiegel 20 in einer teilgeschlossenen Stellung und reflektieren das von der Beleuchtungseinheit eingestrahlte Licht auf den Reflektor 3, von welchem aus die beiden unteren Segmente des zugeordneten Abschnitts der Lichteintrittsfläche 93 beleuchtet werden, sodass die beiden unteren Pixel der Spalte der Leuchtfläche 92 aufleuchten (flächig schwarz dargestellt). Die weiteren Mikrospiegel sind vollständig geöffnet und das von der Beleuchtungseinheit in das Mikrospiegel-Modul 2 eingestrahlte Licht wird dort transmittiert und beleuchtet den oberen Abschnitt der Lichteintrittsfläche 93 und somit die zugehörigen Pixel der Spalte der Leuchtfläche 92.

In Fig. 7e sind vier der Mikrospiegel 20 in derartigen teilgeschlossenen Stellungen, dass das von diesen reflektierte Licht von dem Reflektor 3 in ein einziges Segment der Lichteintrittsfläche 93 gebündelt wird, sodass das zugehörige Pixel der Leuchtfläche 92 in einer entsprechend hohen Intensität aufleuchtet (flächig schraffiert dargestellt). Die über die vollständig geöffneten Mikrospiegel 20 beleuchteten Pixel im oberen Bereich der Leuchtfläche 92 (flächig schwarz) leuchten im Vergleich dazu mit einer geringeren Intensität.

Fig. 8 zeigt eine den Darstellungen der Fig. 7d und Fig. 7e entsprechende Darstellung eines zweiten Ausführungsbeispiels des als Heckleuchte eines Kraftfahrzeugs ausgebildeten Lichtmoduls 100, welches sich von dem ersten Ausführungsbeispiel darin unterscheidet, dass der Reflektor 3 das zweites Mikrospiegel-Modul 4 umfasst, das einen Abschnitt der Reflektoroberfläche bildet, wobei die Mikrospiegel 40 jeweils um eine senkrecht zur Bildebene orientierte Schwenkachse zwischen mehreren Stellungen verschwenkbar sind. Damit ist eine weitere Option zur Variation der in die Anzeigeeinheit 9 eingestrahlten Lichtverteilung gegeben. Beispielhaft nehmen die Mikrospiegel 40 derartige Stellungen ein, dass diese das über das erste Mikrospiegel-Modul 2 eingestrahlte Licht paarweise auf Segmente der Lichteintrittsfläche 93 konzentrieren, sodass die zugehörigen Pixel der Leuchtfläche 92 in einer erhöhten Intensität aufleuchten.

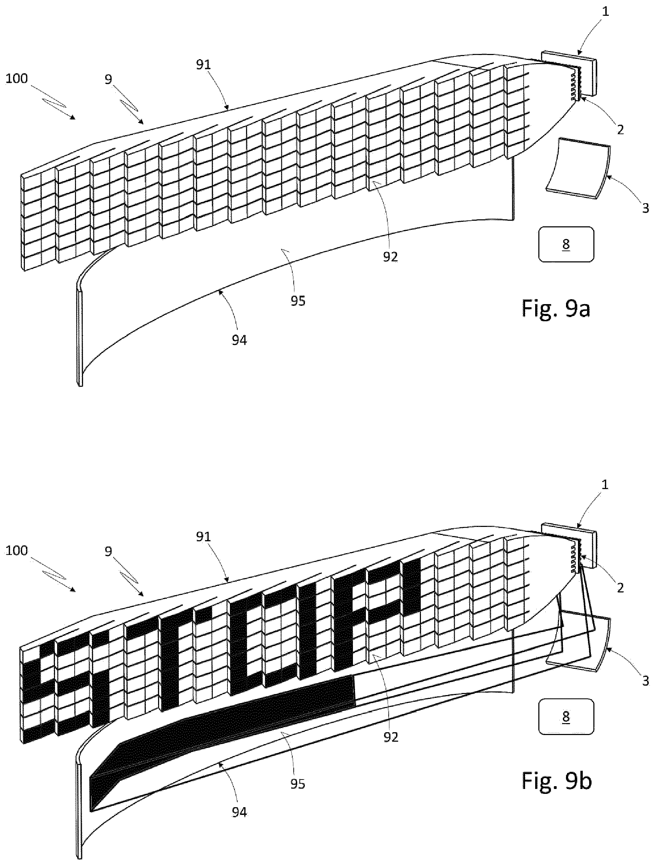

Fig. 9a und Fig. 9b zeigen perspektivische Ansichten eines dritten Ausführungsbeispiel des als Heckleuchte eines Kraftfahrzeugs ausgebildeten Lichtmoduls 100. Im Unterschied zu den vorgenannten Ausführungsbeispielen weist die Anzeigeeinheit 9 das Anzeigeelement 94 mit einer unsegmentierten Leuchtfläche 95 auf, die mit von der Beleuchtungseinheit 1 ausgesandtem und an dem ersten Mikrospiegel-Modul 2 reflektierten Licht über den Reflektor 3 beleuchtbar ist. Die Leuchtfläche 95 ist insbesondere verspiegelt. In dem dargestellten Betriebszustand ist ein Teil der Mikrospiegel des ersten Mikrospiegel-Moduls 2 in einer vollständig geöffneten Stellung, wodurch auf der segmentierten Leuchtfläche 92 die Anzeige des Wortes "STOP" erfolgt, wobei die weiteren Mikrospiegel in teilgeschlossenen Stellungen vorliegen und über den Reflektor 3 die unsegmentierte Anzeigefläche 95 derart beleuchten, dass ein Leuchtband gebildet ist.

In allen Ausführungsbeispielen kann die Dynamik der Aktuierung der Mikrospiegel 20, 40 derart gestaltet sein, dass der menschliche Betrachter eine animierte Signalfolge wahrnimmt. Alternativ oder überlagert dazu kann eine für das menschliche Auge nicht wahrnehmbare Signalmodulation vorgenommen werden, die insbesondere zur Kommunikation mit der Sensorik weiterer Kraftfahrzeuge geeignet ist ("V2V-Kommunikation").

### Bezugszeichenliste:

- 100: Lichtmodul
- 1: Beleuchtungseinheit
- 2: erstes Mikrospiegel-Modul
- 20: Mikrospiegel
- 21: Lichteintrittsseite
- 22: erste Lichtaustrittsseite
- 23: zweite Lichtaustrittsseite
- 24: Trägerkörper
- 25: Mikrosammellinse
- 3: Reflektor
- 4: zweites Mikrospiegel-Modul
- 40: Mikrospiegel
- 5: optoelektronisches Sensormodul
- 50: Sensor
- 6: drittes Mikrospiegel-Modul
- 60: Mikrospiegel
- 7: Projektionsoptik
- 8: Steuergerät
- 9: Anzeigeeinheit
- 91: Lichtleitkörper
- 92: segmentierte Leuchtfläche
- 93: segmentierte Lichteintrittsfläche
- 94: Anzeigeelement
- 95: unsegmentierte Leuchtfläche
- L: Lichtkegel

## Patentansprüche

1. Lichtmodul (100), insbesondere für eine KraftfahrzeugBeleuchtungseinrichtung, wenigstens umfassend
- eine Beleuchtungseinheit (1), die insbesondere zur Erzeugung einer homogenen Ausleuchtung ausgebildet ist,
- ein erstes Mikrospiegel-Modul (2) mit einer Lichteintrittsseite (21), die von der Beleuchtungseinheit (1) ausleuchtbar ist, mit einer der Lichteintrittsseite (21) gegenüberliegenden ersten Lichtaustrittsseite (22) und mit einer zweiten Lichtaustrittsseite (23), wobei das erste Mikrospiegel-Modul (2) eine Mehrzahl von Mikrospiegeln (20) aufweist, die jeweils zwischen einer geöffneten Stellung und wenigstens einer teilgeschlossenen Stellung verstellbar sind, wobei von der Beleuchtungseinheit (1) ausgesandtes Licht bei geöffneter Stellung unreflektiert aus der ersten Lichtaustrittsseite (22) austritt und zur Beleuchtung eines Vorfelds des Lichtmoduls (100) nutzbar ist, und wobei von der Beleuchtungseinheit (1) ausgesandtes Licht bei teilgeschlossener Stellung an den Mikrospiegeln (20) in Richtung der zweiten Lichtaustrittsseite (23) reflektiert wird, und
- einen Reflektor (3), der derart zu dem ersten Mikrospiegel-Modul (2) angeordnet ist, dass er von aus der zweiten Lichtaustrittsseite (23) austretendem Licht beleuchtbar ist und dieses derart reflektiert, dass es zur Beleuchtung des Vorfelds des Lichtmoduls (100) nutzbar ist.

2. Lichtmodul (100) nach Anspruch 1,
**dadurch gekennzeichnet,**
**dass** der Reflektor (3) ein zweites Mikrospiegel-Modul (4) umfasst, das wenigstens einen Abschnitt der Reflektoroberfläche bildet, wobei das zweite Mikrospiegel-Modul (4) eine Mehrzahl von Mikrospiegeln (40) aufweist, die zur variablen Beleuchtung des Vorfelds des Lichtmoduls (100) jeweils zwischen mehreren Stellungen verstellbar sind.

3. Lichtmodul (100) nach einem der vorgenannten Ansprüche,
**dadurch gekennzeichnet,**
**dass** die Mikrospiegel (20) des ersten Mikrospiegel-Moduls (2) derart ausgebildet und zueinander angeordnet sind, dass es teilgeschlossene Stellungen gibt, bei denen eine doppelte Lichtreflexion erfolgt, derart, dass von einer Vorderseite eines ersten Mikrospiegels (20.1) in Richtung der zweiten Lichtaustrittsseite (23) reflektiertes Licht von einer Rückseite eines zweiten Mikrospiegels (20.2) in Richtung der ersten Lichtaustrittsseite (22) reflektiert wird.

4. Lichtmodul (100) nach einem der vorgenannten Ansprüche,
**dadurch gekennzeichnet,**
**dass** ein optoelektronisches Sensormodul (5) zur Funktionsdiagnose vorgesehen ist, das derart zu dem ersten Mikrospiegel-Modul (2) angeordnet ist, dass es von aus der zweiten Lichtaustrittsseite (23) austretendem Licht beleuchtbar ist.

5. Lichtmodul (100) nach einem der vorgenannten Ansprüche,
**dadurch gekennzeichnet,**
**dass** das erste Mikrospiegel-Modul (2) eine zweite Gruppe von Mikrospiegeln (20b) aufweist, wobei die Mikrospiegel (20b) der zweiten Gruppe jeweils zwischen einer geöffneten Stellung und wenigstens einer teilgeschlossenen Stellung verstellbar sind, wobei von der Beleuchtungseinheit (1) ausgesandtes Licht bei geöffneter Stellung unreflektiert aus der ersten Lichtaustrittsseite (22) austritt und zur Beleuchtung eines Vorfelds des Lichtmoduls (100) nutzbar ist, und wobei von der Beleuchtungseinheit (1) ausgesandtes Licht bei teilgeschlossener Stellung an den Mikrospiegeln (20b) der zweiten Gruppe in Richtung eines dritten Mikrospiegel-Moduls (6) des Lichtmoduls (100) reflektiert wird, wobei das dritte Mikrospiegel-Modul (6) eine Mehrzahl von Mikrospiegeln (60) aufweist, die zur variablen Beleuchtung des Vorfelds des Lichtmoduls (100) jeweils zwischen mehreren Stellungen verstellbar sind.

6. Lichtmodul (100) nach Anspruch 5,
**dadurch gekennzeichnet,**
**dass** das erste Mikrospiegel-Modul (2) einen lichtdurchlässigen Trägerkörper (24) aufweist, wobei eine erste Gruppe von Mikrospiegeln (20) auf einer der Lichteintrittsseite (21) zugewandten Seite des Trägerkörpers (24) angeordnet ist, und wobei die zweite Gruppe von Mikrospiegeln (20b) auf einer der ersten Lichtaustrittsseite (22) zugewandten Seite des Trägerkörpers (24) angeordnet ist.

7. Lichtmodul (100) nach einem der vorgenannten Ansprüche,
**dadurch gekennzeichnet,**
**dass** die Mikrospiegel (20, 40, 60) des ersten Mikrospiegel-Moduls (2), des zweiten Mikrospiegel-Moduls (4) und/oder des dritten Mikrospiegel-Moduls (6) jeweils einen zumindest einseitig verspiegelten Blattabschnitt aufweisen, der um eine erste Schwenk- oder Drehachse und/oder um eine zweite Schwenk- oder Drehachse verstellbar ist, wobei in Bezug auf eine vorgesehene Einbaulage des Lichtmoduls (100), insbesondere in einer KraftfahrzeugBeleuchtungseinrichtung, die erste Schwenk- oder Drehachse horizontal und die zweite Schwenk- oder Drehachse vertikal orientiert ist.

8. Lichtmodul (100) nach einem der vorgenannten Ansprüche,
**dadurch gekennzeichnet,**
**dass** das erste Mikrospiegel-Modul (2) eine der Anzahl der Mikrospiegel (20, 20b) entsprechende Anzahl von Mikrosammellinsen (25) aufweist, wobei jedem Mikrospiegel (20, 20b) eine Mikrosammellinse (25) zugeordnet ist, wobei die Mikrosammellinsen (25) zwischen der Lichteintrittsseite (21) und den Mikrospiegeln (20, 20b) angeordnet sind, derart, dass jeder Mikrospiegel (20) zwischen der jeweils zugeordneten Mikrosammellinse (25) und deren hinterer Brennebene angeordnet ist.

9. Lichtmodul (100) nach einem der vorgenannten Ansprüche, ausgebildet als ein Frontscheinwerfer für ein Kraftfahrzeug, umfassend eine Projektionsoptik (7) zur Lichtprojektion in das Vorfeld des Kraftfahrzeugs und ein Steuergerät (8), das zu einer derartigen Steuerung der Mikrospiegel (20, 40, 60) des ersten Mikrospiegel-Moduls (2), des zweiten Mikrospiegel-Moduls (4) und/oder des dritten Mikrospiegel-Moduls (6) ausgebildet ist, dass mittels des Frontscheinwerfers eine selektive Mehrfeldausleuchtung des Vorfelds des Kraftfahrzeugs erzeugbar ist, insbesondere zur Bildung eines Fernlichts, eines Abblendlichts, eines Tagfahrlichts, eines Kurvenlichts, zur Signalprojektion und/oder zur selektiven Objektausleuchtung.

10. Lichtmodul (100) nach einem der vorgenannten Ansprüche, ausgebildet als eine Heckleuchte für ein Kraftfahrzeug, umfassend eine Anzeigeeinheit (9) mit einem Lichtleitkörper (91), der eine segmentierte Leuchtfläche (92) und eine korrespondierend segmentierte Lichteintrittsfläche (93) aufweist, wobei die Lichteintrittsfläche (93) mit von der Beleuchtungseinheit (1) ausgesandtem Licht über das erste Mikrospiegel-Modul (2), den Reflektor (3), das zweite Mikrospiegel-Modul (4) und/oder das dritte Mikrospiegel-Modul (6) beleuchtbar ist, weiterhin umfassend ein Steuergerät (8), das zu einer derartigen Steuerung der Mikrospiegel (20, 40, 60) des ersten Mikrospiegel-Moduls (2), des zweiten Mikrospiegel-Moduls (4) und/oder des dritten Mikrospiegel-Moduls (6) ausgebildet ist, dass zur Bildung eines Rücklichts, eines Bremslichts oder eines Fahrtrichtungsanzeigers und/oder zur Erzeugung von optischen Signalen auf der segmentierten Leuchtfläche (92) eine selektive Beleuchtung der Lichteintrittsfläche (93) erzeugbar ist.

11. Lichtmodul (100) nach Anspruch 10,
**dadurch gekennzeichnet,**
**dass** die Anzeigeeinheit (9) ein Anzeigeelement (94) mit einer unsegmentierten Leuchtfläche (95) aufweist, die mit von der Beleuchtungseinheit (1) ausgesandtem Licht über das erste Mikrospiegel-Modul (2), den Reflektor (3), das zweite Mikrospiegel-Modul (4) und/oder das dritte Mikrospiegel-Modul (6) beleuchtbar ist.

12. Verfahren zum Betrieb eines Lichtmoduls (100) nach einem der vorgenannten Ansprüche, wobei die Beleuchtungseinheit (1) betrieben wird und die Mikrospiegel (20, 40, 60) des ersten Mikrospiegel-Moduls (2), des zweiten Mikrospiegel-Moduls (4) und/oder des dritten Mikrospiegel-Moduls (6) mittels eines Steuergeräts (8) fortlaufend zur Einnahme von zweckmäßigen Stellungen angesteuert werden, derart, dass eine gewünschte Beleuchtung des Vorfelds des Lichtmoduls (100) erzeugt wird, insbesondere eine dynamische, selektive Mehrfeldausleuchtung.

13. Verfahren nach Anspruch 12,
**dadurch gekennzeichnet,**
**dass** eine Funktionsdiagnose des ersten Mikrospiegel-Moduls (2) durchgeführt wird, indem dessen Mikrospiegel (20) sequenziell oder gruppenweise zur Einnahme von teilgeschlossenen Stellungen angesteuert werden, in denen von der Beleuchtungseinheit (1) ausgesandtes Licht durch die zweite Lichtaustrittsseite (23) auf das optoelektronische Sensormodul (5) reflektiert wird, und die dabei von dem Sensormodul (5) empfangenen Lichteindrücke mit zugehörigen Sollwerten verglichen werden.

## Claims

1. Lighting module (100), in particular for a motor vehicle lighting system, comprising at least
- a lighting unit (1) which is designed, in particular, to produce homogeneous illumination,
- a first micromirror module (2) having a light-entry side (21) which can be illuminated by the lighting unit (1), a first light-exit side (22) opposite the light-entry side (21), and a second light-exit side (23), wherein the first micromirror module (2) comprises a plurality of micromirrors (20), each of which is adjustable between an open position and at least one partially closed position, whereby light emitted by the illumination unit (1) exits unreflected from the first light exit side (22) when in the open position and can be utilised to illuminate a field in front of the light module (100), and wherein, in the partially closed position, light emitted by the illumination unit (1) is reflected by the micromirrors (20) in the direction of the second light-emitting side (23), and
- a reflector (3) arranged relative to the first micro mirror module (2) in such a way that it can be illuminated by light emerging from the second light-emitting side (23) and reflects this light in such a way that it can be used to illuminate the area in front of the light module (100).

2. Light module (100) according to claim 1,
**characterised in that**
the reflector (3) comprises a second micromirror module (4) which forms at least a portion of the reflector surface, wherein the second micromirror module (4) comprises a plurality of micromirrors (40), each of which is adjustable between a plurality of positions for the variable illumination of the area in front of the light module (100).

3. Light module (100) according to one of the aforementioned claims,
**characterised in that**
the micromirrors (20) of the first micromirror module (2) are designed and arranged relative to one another in such a way that there are partially closed positions in which double light reflection occurs, such that light reflected from the front face of a first micromirror (20.1) towards the second light-exit side (23) is reflected by a rear surface of a second micromirror (20.2) towards the first light-exit side (22).

4. A light module (100) according to one of the preceding claims,
**characterised in that**
an optoelectronic sensor module (5) for functional diagnostics is provided, which is arranged relative to the first micro mirror module (2) in such a way that it can be illuminated by light emerging from the second light-exit side (23).

5. Light module (100) according to one of the aforementioned claims,
**characterised in that**
the first micro mirror module (2) comprises a second group of micro mirrors (20b), wherein the micro mirrors (20b) of the second group are each adjustable between an open position and at least one partially closed position, whereby light emitted by the illumination unit (1) exits unreflected from the first light-emitting side (22) when the micro-mirrors are in the open position and can be utilised to illuminate a field in front of the light module (100), and wherein, when the micro mirrors (20b) of the second group is reflected in the direction of a third micromirror module (6) of the light module (100), wherein the third micromirror module (6) comprises a plurality of micromirrors (60), each of which is adjustable between several positions for the variable illumination of the area in front of the light module (100).

6. Light module (100) according to claim 5,
**characterised in that**
the first micromirror module (2) comprises a light-transmissive support body (24), wherein a first group of micromirrors (20) is arranged on a side of the support body (24) facing the light-entry side (21), and wherein the second group of micromirrors (20b) is arranged on a side of the support body (24) facing the first light exit side (22).

7. A light module (100) according to one of the preceding claims,
**characterised in that**,
the micromirrors (20, 40, 60) of the first micromirror module (2), the second micro mirror module (4) and/or the third micro mirror module (6) each comprise a sheet section that is mirrored on at least one side and which is adjustable about a first pivot or rotation axis and/or about a second pivot or rotation axis, whereby, with respect to a intended installation position of the light module (100), in particular in a motor vehicle lighting system, the first pivot or rotation axis is oriented horizontally and the second pivot or rotation axis is oriented vertically.

8. Light module (100) according to one of the aforementioned claims,
**characterised in that**
the first micro mirror module (2) comprises a number of micro- collecting lenses (25) corresponding to the number of micro mirrors (20, 20b), wherein a micro- collecting lens (25) is associated with each micro mirror (20, 20b) is assigned a micro- collecting lens (25), wherein the micro- collecting lenses (25) are arranged between the light-entry side (21) and the micro-mirrors (20, 20b) in such a way that each micromirror (20) is situated between the respective associated micro- collecting lens (25) and the latter's rear focal plane.

9. A light module (100) according to one of the aforementioned claims, designed as a headlamp for a motor vehicle, comprising a projection optical system (7) for projecting light into the area in front of the motor vehicle and a control unit (8), which is designed to control the micro mirrors (20, 40, 60) of the first micro mirror module (2), the second micro mirror module (4) and/or the third micro mirror module (6) such that the headlamp can be used to generate selective multi-field illumination of the area in front of the motor vehicle, in particular to produce a main beam, a dipped beam, a daytime running light, a cornering light , for signal projection and/or for selective object illumination.

10. Light module (100) according to one of the aforementioned claims, designed as a rear light for a motor vehicle, comprising a display unit (9) with a light-guiding body (91) which has a segmented light-emitting surface (92) and a correspondingly segmented light-entry surface (93), wherein the light-entry surface (93) can be illuminated with light emitted by the lighting unit (1) via the first micromirror module (2), the reflector (3), the second micromirror module (4) and/or the third micromirror module (6), and further comprising a control unit (8) which is configured to control the micromirrors (20, 40, 60) of the first micromirror module (2), the second micromirror module (4) and/or the third micromirror module (6) such that, for the purpose of forming a rear light, a brake light or a direction indicator and/or for generating optical signals on the segmented light-emitting surface (92), selective illumination of the light-entry surface (93) can be achieved.

11. Light module (100) according to claim 10,
**characterised in that**
the display unit (9) comprises a display element (94) with a non-segmented luminous surface (95), which can be illuminated by light emitted by the illumination unit (1) via the first micromirror module (2), the reflector (3), the second micromirror module (4) and/or the third micromirror module (6).

12. A method of operating a light module (100) according to one of the aforementioned claims, wherein the illumination unit (1) is operated and the micromirrors (20, 40, 60) of the first micromirror module (2), the second micromirror module (4) and/or the third micromirror module (6) are continuously driven by a control unit (8) to assume appropriate positions, such that a desired illumination of the field of view of the light module (100) is produced, in particular a dynamic, selective multi-field illumination.

13. A method according to claim 12,
**characterised in that**
a functional diagnosis of the first micro mirror module (2) is carried out by controlling its micro mirrors (20) sequentially or in groups to assume partially closed positions, in which light emitted by the illumination unit (1) is reflected through the second light-emitting side (23) onto the optoelectronic sensor module (5), and the light signals received by the sensor module (5) in the process are compared with corresponding setpoints.

## Revendications

1. Module d'éclairage (100), en particulier pour un dispositif d'éclairage de véhicule automobile, comprenant au moins
- une unité d'éclairage (1), conçue notamment pour produire un éclairage homogène,
- un premier module à micro-miroirs (2) comportant un côté d'entrée de lumière (21) pouvant être éclairé par l'unité d'éclairage (1), un premier côté de sortie de lumière (22) situé à l'opposé du côté d'entrée de lumière (21) et un deuxième côté de sortie de lumière (23), le premier module à micro-miroirs (2) comportant une pluralité de micro-miroirs (20) qui sont chacun réglables entre une position ouverte et au moins une position partiellement fermée, la lumière émise par l'unité d'éclairage (1) sortant sans être réfléchie par la première face de sortie de lumière (22) lorsque les micro-miroirs sont en position ouverte et pouvant être utilisée pour éclairer une zone située devant le module d'éclairage (100), et dans lequel, en position partiellement fermée, la lumière émise par l'unité d'éclairage (1) est réfléchie par les micro-miroirs (20) en direction de la deuxième face de sortie de lumière (23), et
- un réflecteur (3) qui est disposé par rapport au premier module de micro-miroirs (2) de telle sorte qu'il puisse être éclairé par la lumière sortant de la deuxième face de sortie de lumière (23) et qu'il réfléchisse celle-ci de manière à ce qu'elle puisse être utilisée pour éclairer la zone située devant le module d'éclairage (100).

2. Module d'éclairage (100) selon la revendication 1,
**caractérisé en ce**
**que** le réflecteur (3) comprend un deuxième module à micro-miroirs (4) qui forme au moins une partie de la surface du réflecteur, le deuxième module à micro-miroirs (4) comportant une pluralité de micro-miroirs (40) qui sont chacun réglables entre plusieurs positions pour assurer un éclairage variable de la zone située devant le module d'éclairage (100).

3. Module d'éclairage (100) selon l'une des revendications précédentes,
**caractérisé en ce**
**que** les micromiroirs (20) du premier module à micromiroirs (2) sont conçus et disposés les uns par rapport aux autres de telle sorte qu'il existe des positions partiellement fermées dans lesquelles une double réflexion de la lumière a lieu, de telle sorte que la lumière réfléchie depuis la face avant d'un premier micromiroir (20.1) en direction de la deuxième face de sortie de lumière (23) soit réfléchie par la face arrière d'un deuxième micro-miroir (20.2) en direction de la première face de sortie de lumière (22).

4. Module optique (100) selon l'une des revendications précédentes,
**caractérisé en ce**
**qu'**il est prévu un module de capteur optoélectronique (5) destiné au diagnostic de fonctionnement, qui est disposé par rapport au premier module de micro-miroirs (2) de telle sorte qu'il puisse être éclairé par la lumière sortant de la deuxième face de sortie de lumière (23).

5. Module optique (100) selon l'une des revendications précitées,
**caractérisé en ce que**
le premier module à micro-miroirs (2) comporte un deuxième groupe de micro-miroirs (20b), les micro-miroirs (20b) du deuxième groupe sont chacun réglables entre une position ouverte et au moins une position partiellement fermée, la lumière émise par l'unité d'éclairage (1) sortant sans être réfléchie par la première face de sortie de lumière (22) lorsque les micro-miroirs (20b) sont en position ouverte et pouvant être utilisée pour éclairer une zone située devant le module d'éclairage (100), et la lumière émise par l'unité d'éclairage (1) étant, lorsque les micro-miroirs sont en position partiellement fermée (20b) du deuxième groupe est réfléchie en direction d'un troisième module à micro-miroirs (6) du module d'éclairage (100), le troisième module à micro-miroirs (6) comportant une pluralité de micro-miroirs (60) qui sont chacun réglables entre plusieurs positions pour assurer un éclairage variable de la zone située devant le module d'éclairage (100).

6. Module d'éclairage (100) selon la revendication 5,
**caractérisé en ce**
**que** le premier module à micro-miroirs (2) comporte un corps de support (24) transparent à la lumière, un premier groupe de micro-miroirs (20) étant disposé sur une face du corps de support (24) tournée vers le côté d'entrée de la lumière (21), et le deuxième groupe de micro-miroirs (20b) est disposé sur une face du corps de support (24) tournée vers la première face de sortie de la lumière (22).

7. Module optique (100) selon l'une des revendications précédentes,
**caractérisé en ce que**,
les micro-miroirs (20, 40, 60) du premier module à micro-miroirs (2), du deuxième module à micro-miroirs (4) et/ou du troisième module à micro-miroirs (6) comportent chacun une partie de lame réfléchissante au moins d'un côté, qui est réglable autour d'un premier axe de pivotement ou de rotation et/ou autour d'un deuxième axe de pivotement ou de rotation, la première axe de pivotement ou de rotation , par rapport à une position de montage prévue du module d'éclairage (100), notamment dans un dispositif d'éclairage de véhicule automobile, le premier axe de pivotement ou de rotation est orienté horizontalement et le deuxième axe de pivotement ou de rotation est orienté verticalement.

8. Module d'éclairage (100) selon l'une des revendications précédentes,
**caractérisé en ce**
**que** le premier module à micro-miroirs (2) comporte un nombre de micro-lentilles convergentes (25) correspondant au nombre de micro-miroirs (20, 20b), une micro-lentille convergente (20, 20b) est associée une microlentille convergente (25), les microlentilles convergentes (25) étant disposées entre le côté d'entrée de la lumière (21) et les micro-miroirs (20, 20b), de telle sorte que chaque micro-miroir (20) soit disposé entre la microlentille convergente (25) qui lui est associée et le plan focal arrière de celle-ci.

9. Module d'éclairage (100) selon l'une des revendications précitées, conçu comme un projecteur avant pour un véhicule automobile, comprenant une optique de projection (7) destinée à projeter de la lumière dans le champ de vision devant le véhicule automobile et un dispositif de commande (8), qui est conçu pour commander de telle sorte les micro-miroirs (20, 40, 60) du premier module de micro-miroirs (2), du deuxième module de micro-miroirs (4) et/ou du troisième module à micro-miroirs (6), de telle sorte qu'un éclairage sélectif à plusieurs zones de la zone située devant le véhicule automobile puisse être généré au moyen du projecteur avant, notamment pour former un feu de route, un feu de croisement, un feu de jour, un éclairage en virage , pour la projection de signaux et/ou pour l'éclairage sélectif d'objets.

10. Module d'éclairage (100) selon l'une des revendications précitées, conçu comme un feu arrière pour un véhicule automobile, comprenant une unité d'affichage (9) avec un corps de guidage de lumière (91) qui présente une surface lumineuse segmentée (92) et une surface d'entrée de lumière segmentée de manière correspondante , la surface d'entrée de lumière (93) pouvant être éclairée par la lumière émise par l'unité d'éclairage (1) via le premier module à micro-miroirs (2), le réflecteur (3), le deuxième module à micro-miroirs (4) et/ou le troisième module à micro-miroirs (6), comprenant en outre un dispositif de commande (8) conçu pour commander de telle sorte les micro-miroirs (20, 40, 60) du premier module à micro-miroirs (2), du deuxième module à micro-miroirs (4) et/ou du troisième module à micro-miroirs (6) permettant de générer un éclairage sélectif de la surface d'entrée de la lumière (93) afin de former un feu arrière, un feu stop ou un clignotant et/ou de produire des signaux optiques sur la surface lumineuse segmentée (92).

11. Module d'éclairage (100) selon la revendication 10,
**caractérisé en ce que**,
l'unité d'affichage (9) comporte un élément d'affichage (94) doté d'une surface lumineuse non segmentée (95) qui peut être éclairée par la lumière émise par l'unité d'éclairage (1) via le premier module à micro-miroirs (2), le réflecteur (3), le deuxième module à micro-miroirs (4) et/ou le troisième module à micro-miroirs (6).

12. Procédé de fonctionnement d'un module d'éclairage (100) selon l'une des revendications susmentionnées, dans lequel l'unité d'éclairage (1) est mise en service et les micromiroirs (20, 40, 60) du premier module à micromiroirs (2), du deuxième module à micro-miroirs (4) et/ou du troisième module à micro-miroirs (6) sont commandés en continu par un dispositif de commande (8) pour adopter des positions appropriées, de manière à produire un éclairage souhaité de la zone devant le module d'éclairage (100), en particulier un éclairage dynamique et sélectif de plusieurs zones.

13. Procédé selon la revendication 12,
**caractérisé en ce**
**qu'**un diagnostic de fonctionnement du premier module à micro-miroirs (2) est effectué en commandant ses micro-miroirs (20), de manière séquentielle ou par groupes, pour qu'ils adoptent des positions partiellement fermées, dans lesquelles la lumière émise par l'unité d'éclairage (1) est réfléchie par la deuxième face de sortie de lumière (23) vers le module capteur optoélectronique (5) par la deuxième face de sortie de lumière (23), et les signaux lumineux ainsi reçus par le module capteur (5) sont comparés aux valeurs de consigne correspondantes.
